# EUROPEAN PATENT APPLICATION

(11) **EP 2 887 122 A1**
(43) Date of publication of application: **24.06.2015**
(21) Application number: 13005973.6
(22) Date of filing: 20.12.2013
(51) Int. Cl.: G02B 27/01

(54) **Smart eyewear device for electronic or electrical applications**

(71) Applicant: ABB AG, 68309 Mannheim (DE)
(72) Inventor: Zank, Gunnar, 06179 Teutschenthal (DE); Scherr, Wolfgang, 68239 Mannheim (DE); Merkel, Hans-Peter, 69198 Schriesheim (DE)

(57) **Abstract**

The invention relates to an eyewear device (3) for use in monitoring electrical devices (2) in an industrial installation, comprising:
- an eyewear frame;
- an identification unit (31) for obtaining an identification from a specific one of the electrical devices (2);
- a communication unit (32) for communicating with a remote data repository (41) to retrieve data associated with the specific electrical device (2);
- a display screen (33) for presenting the data associated with the specific electrical device (2); and
- a processing unit (34) configured to operate the identification unit (31), the communication unit (32) and the display screen (33) in order to:
- identify the specific electrical device (2);
- retrieve data associated with the specific electrical device (2); and
- present retrieved data on the display screen (33).

## Description

### Technical field

The present invention relates to the field of maintenance and diagnosis of electrical devices, particularly for efficiently providing maintenance, diagnosis, control, and operation condition information at the location of the electrical device.

### Related art

For electrical devices or modules, such as used for switchgear installations, electrical machine assemblies and the like, a process and starter visualization is commonly provided either in the form of condition indication units or of monitors operated by corresponding application software.

The operation conditions of the electrical devices/modules are usually visualized and monitored centrally, e. g. by means of a human-machine interface (HMI). Furthermore, condition indicators, such as indicator lamps or the like, may be provided at the location of the associated electrical device which, however, usually provides only limited information. In both cases, the information provided is limited to either status information and/or measured values.

Moreover, controlling the electrical devices is either carried out from a central location, such as a plant control room, or via a control panel of the electrical device.

In case of multiple control levels, which are common in many electrical devices in manufacturing plants, the control levels have to be embedded in the control system and have to be available as hardware devices which are incorporated in the control structure of the control system.

The maintenance of electrical devices/modules is often performed locally, i. e. at the specific location of the electrical device , so that it is useful to have available information about the operation conditions, diagnosis information about failures occurred, control state information and the like. Furthermore, it might be useful for an operator maintaining the electrical device to input commands or to otherwise control the operation of the electrical device.

It is therefore an object of the present invention to provide a user with means for monitoring an electrical device, in particular for providing device-related information at the location of the respective electrical device and to further provide the possibility of manipulating device-related settings such as to allow for user-device interaction.

### Summary

This object has been achieved by the smart eyewear device, such as smart glasses, for use in monitoring electrical devices/modules according to claim 1 and by the method for operating an eyewear device and the industrial installation according to the further independent claims.

Further embodiments are indicated in the dependent subclaims.

According to a first aspect, there is provided an eyewear device for use in monitoring electrical devices or modules in an industrial installation, comprising:
- an eyewear frame;
- an identification unit for obtaining identification information from a specific one of the electrical devices;
- a communication unit for communicating with a remote data repository to retrieve data associated with the specific electrical device;
- a display screen for presenting the data associated with the specific electrical device; and
- a processing unit configured to operate the identification unit, the communication unit and the display screen in order to:
- identify the specific electrical device;
- retrieve data associated with the specific electrical device; and
- present retrieved data on the display screen.

One idea of the present invention is to provide a smart eyewear device to be used as an I/O device at the location of a specific electrical device or electrical module. To identify the respective electrical device, the smart eyewear device is configured to retrieve information about the specific device to be monitored and to display said information on a display screen of the smart eyewear device. This allows the user to obtain device-specific information required for monitoring, maintaining, repairing, performing diagnosis, changing operation conditions, changing control conditions and the like at the location of the electrical device.

Moreover, the eyewear device may be provided with a protection glass, in particular wherein the protection glass is formed to protect the eyes from a lateral direction when worn by a user. Preferably, the smart eyewear device is configured as safety glasses which are usually required to be used in industrial installations, so that wearing the smart eyewear device with smart glasses features does not cause any additional inconvenience.

It may further be provided that the display screen is partly transparent for displaying a virtual image overlaying a real image of the specific electrical device.

Furthermore, the processing unit may be configured to present a dynamic control panel on the display screen which is adjusted to overlay a real image of the specific electrical device, wherein the adjusting is performed by means of an optical detector. According to an embodiment, the dynamic control panel may be configured to provide maintenance information, monitoring information, and condition information associated with at least a portion of the specific electrical device.

The processing unit may be configured to detect, by means of the optical detector, a user movement of a body part or a tool in the range of the real image and to interpret the detected movement as a control action, resulting in a retrieval of further data from the data repository.

Moreover, an input unit may be provided to complete an operation of the processing unit by means of a manual operation.

Furthermore, the data may include at least one of maintenance data, repair data, diagnosis data, operation condition data, and control condition data.

According to a further aspect, a method for operating an eyewear device for use in monitoring electrical devices or electrical modules in an industrial installation is provided, comprising the steps of:
- identifying a specific one of the electrical devices;
- retrieving data associated with the identified specific electrical device; and
- presenting retrieved data on the display screen.

According to a further aspect, an industrial installation is provided, comprising:
- multiple electrical devices;
- a control system including a data repository; and
- the above eyewear device.

### Brief description of the drawings

Embodiments are described in more detail in conjunction with the accompanying drawings in which:
Fig. 1 shows a block diagram of a system for providing information and/or interaction regarding a specific electrical device; and
Fig. 2 shows a flowchart for illustrating a method for operating the smart glasses using the system of Fig. 1.

### Description of embodiments

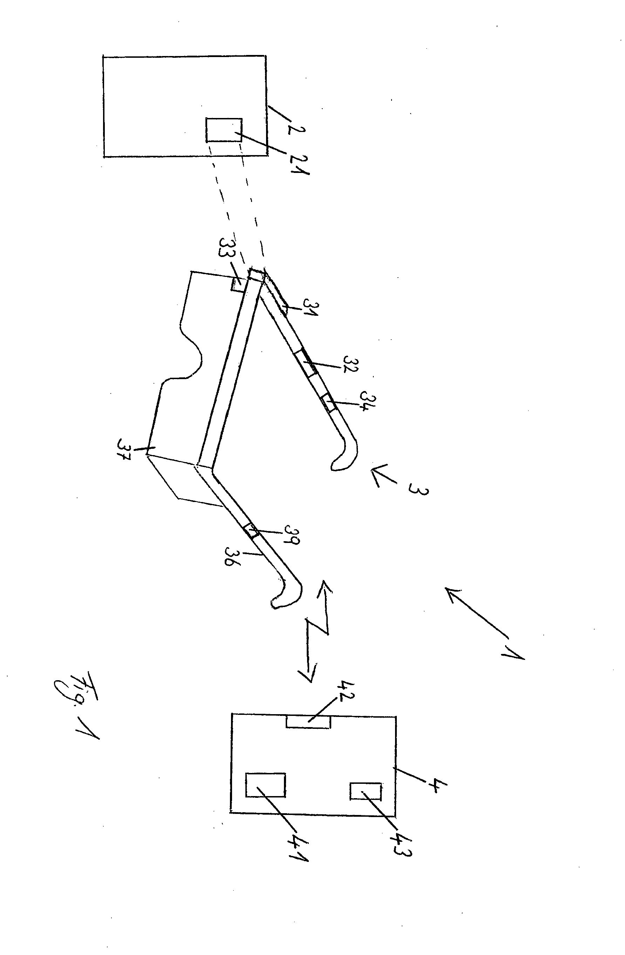

Fig. 1 schematically shows a block diagram of a system 1 for providing device-specific information and/or an interaction related to a specific electrical device 2 or module, such as a power electronics device. The specific electrical device 2 can be one of many separate devices or separate modules (e.g. in separate housings) in an electric infrastructure which are connected and set up as an industrial installation. The electrical device 2 can, e. g., be a switchgear application, an electrical machine, such as a motor device, or the like.

An eyewear device 3, such as a pair of glasses, is provided which is configured as smart glasses for providing information supporting a user when monitoring or controlling the electrical devices 2 in the industrial installation. The eyewear device 3 is meant to be worn by the user at the locations of the electrical devices 2.

The eyewear device 3 is constructed as conventional safety glasses with a frame 35 and temples 36. Moreover, the frame 35 holds a transparent protection glass 37 which protects the user's eyes. The protection glass 37 may be made of a non-breakable transparent material and may be curved to also protect the eyes from incidents coming from lateral directions.

The eyewear device 3 has an identification unit 31 to detect an identification item of a specific electrical device 2. For instance, the electrical device 2 can be provided with an identification tag, e. g. an optical marker 21, such as a visual QR or bar code or an NFC token (NFC = near field communication), attached at or close to the specific electrical device 2, by which the electrical device 2 is identifiable. Alternatively or additionally, an RF tag can be placed at the electrical device 2 to provide the identification information. Other kind of identification tags or markers, which are capable to transmit a unique identification of the electrical device 2, could also be attached at or close to the electrical device 2.

The identification unit 31 of the smart eyewear device 3 can e. g. include an optical detector, a camera or an optical scanner which are capable of scanning the optical marker 21, an NFC transponder which is capable to read out the NFC token, or an RF reading unit for reading information from the RF tag. When reading out data, the identification unit 31 provides an identification information corresponding or related to the information scanned or read out by the identification unit 31. The scanned or read out identification information may provide or is related to an address code which indicates an address link to device-related data associated with the specific electrical device 2.

The smart eyewear device 3 further includes a communication unit 32 which preferably allows a wireless communication with a data repository 41 in a control system 4. The data repository 41 contains device-related data including at least one of maintenance data, repair data, diagnosis data, operation condition data, control condition data and the like.

By means of the communication unit 32 the address code/identification information is transferred to a communication interface 42 of the control system 4. The communication interface 42 is configured to establish a bidirectional data connection with the communication unit 32 of the eyewear device 3, such as a WiFi or Bluetooth connection and the like. A control unit 43 is provided and configured to, if necessary, assign read addresses of the memory of the data repository 41 which stores the data related to the electrical device 2 whose identification information has been scanned or read. In other embodiments, data can be retrieved from a cable-connected additional smart device carried by the user or can be stored in a memory unit of the eyewear device 3. The data can represent text or graphical data which may be retrieved in standard formats such as HTML or the like.

The eyewear device 3 further comprises a processing unit 34 and a display screen 33 located at an edge region of the protection glass 37, such as an upper right or upper left corner of the front portion of the protection glass 37. The display screen 33 may be configured as a semi-transparent display which may overlay the perception of the environment behind the display screen 33, so that a combined optical representation of a real and virtual picture can be perceived.

The processing unit 34 is capable of processing the data retrieved from the data repository 41 and to present the retrieved data on the display screen 33 in a manner which supports the user to perceive the required technical information associated with the electrical device 2, such as condition, diagnosis, instruction information and the like. The retrieved data can be presented as text or graphical data. For instance, the presentation of the data on the display screen 33 may inform the user about a fault occurred, steps for performing maintenance, steps for correcting a fault occurred and/or operational information about the current state of the specific electrical device 2.

Beyond the mere displaying of information on the display screen 33 of the smart eyewear device 3 as described above, the processing unit 34 can further be configured to display a dynamic control panel on the display screen 33. The dynamic control panel, i. e. a virtual image thereof, can be displayed overlaying the real image of the specific electrical device 2 or a part of it when the user is located close to it. When wearing the smart eyewear device 3 and looking on a surface of the specific electrical device 2, the dynamic control panel is then displayed on the display screen 33 overlaying the real image to provide information associated with parts of the specific electrical device 2, such as maintenance information, monitoring information, condition information or the like.

A movement of a body part or a tool by the operator, preferably in the image range of the real image, can be used as a control action. For example, the movement can be a wiping movement of a hand of the user. The adjustment of the presentations of the virtual image of the dynamic control panel and the real image of the electrical device 2 can be made by the camera as used in the identification unit 31.

This control action can serve or be interpreted as an input instruction to retrieve additional information about the specific electrical device 2 or about that special condition of the specific electrical device 2. The control action may result in that a button or display area in the dynamic control panel will be highlighted or indicated in any other manner to show an activation of a corresponding function.

Additionally, apart from the possibility to make inputs using the dynamic control panel, an input unit 39, such as a push button or touch field, can be included in the smart eyewear device 3, which allows to complete an operation by a manual operation, e. g. by double touching or activating in any other manner the input unit 39 or a part of the glasses to confirm the processing of an operation.

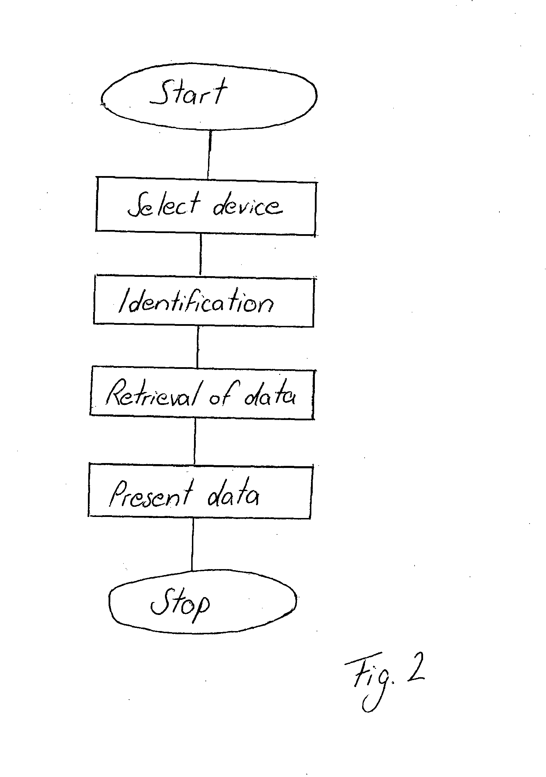

In Figure 2 a flow chart is illustrated representing the method for operating the smart eyewear device 3.

In step S1, the user approaches a specific electrical device 2 in the industrial installation to perform a monitoring, a maintenance operation or a repair after a fault has occurred.

In step S2, the identification unit 31 obtains an identification provided by means of the identification tag. So-obtained identification information is then processed by the processing unit 34 to obtain an address for the data to be retrieved.

In step S3, data is retrieved from the data repository 41 based on the address obtained and communicated to the eyewear device 3.

In step S4, the retrieved data is presented on the display screen 33 of the eyewear device 3 in the form of text, graphics, images or video.

One major advantage of the smart eyewear device 3 is that the dynamic control panel being displayed on the display screen 33 of the smart eyewear device 3 can be dynamically adjusted to an operational need of the specific electrical device 2. The dynamic control panel to be displayed can be adapted to the different electrical devices 2 in the industrial installation, so that the number and variance of control panels can be reduced in all areas, e. g. inside the switchboard and at the motor in the field. Furthermore, the type of the buttons and activation fields of the control panel can be adjusted to the functionality of the respective electrical device 2 and to user needs.

## Claims

1. Eyewear device (3) for use in monitoring electrical devices (2) in an industrial installation, comprising:
- an eyewear frame (35);
- an identification unit (31) for obtaining an identification from a specific one of the electrical device (2);
- a communication unit (32) for communicating with a remote data repository (41) to retrieve data associated with the specific electrical device (2);
- a display screen (33) for presenting the data associated with the specific electrical device (2); and
- a processing unit (34) configured to operate the identification unit (31), the communication unit (32) and the display screen (33) in order to:
- identify the specific electrical device (2);
- retrieve data associated with the specific electrical device (2); and
- present retrieved data on the display screen (33).

2. Eyewear device (3) according to claim 1, wherein the eyewear device (3) is provided with a protection glass (37), in particular wherein the protection glass (37) is formed to protect the eyes from a lateral direction when worn by a user.

3. Eyewear device (3) according to claim 1 or 2, wherein the display screen (33) is partly transparent to display a virtual image overlaying a real image of the specific electrical device (2).

4. Eyewear device (3) according to claim 3, wherein the processing unit (34) is configured to present a dynamic control panel on the display screen (33) which is adjusted to overlay a real image of the specific electrical device (2), wherein the adjusting is performed by means of an optical detector.

5. Eyewear device (3) according to claim 4, wherein the dynamic control panel is configured to provide maintenance information, monitoring information, and condition information associated with at least a portion of the specific electrical device (2).

6. Eyewear device (3) according to claim 4 or 5, wherein the processing unit (34) is configured to detect, by means of the optical detector, a user move-ment of a body part or a tool in the range of the real image and to interpret the detected movement as a control action, resulting in a retrieval of further data from the data repository (41).

7. Eyewear device (3) according to any one of claims 1 to 6, wherein an input unit (39) is provided to complete an operation of the processing unit (34) by a manual operation.

8. Eyewear device (3) according to any one of claims 1 to 7, wherein the data includes at least one of maintenance data, repair data, diagnosis data, operation condition data, and control condition data.

9. Method for operating an eyewear device (3) for use in monitoring electrical devices (2) in an industrial installation, comprising the steps of:
- identifying a specific one of the electrical devices(2);
- retrieving data associated with the identified specific electrical device (2); and
- presenting retrieved data on the display screen (33).

10. Industrial installation comprising:
- multiple electrical devices (2);
- a control system (4) including a data repository (41); and
- an eyewear device (3) according to any one of claims 1 to 8.
